Europäisches Patentamt

European Patent Office

Office européen des brevets

(11) Veröffentlichungsnummer: **0 373 541**
**A2**

(12) # EUROPÄISCHE PATENTANMELDUNG

(21) Anmeldenummer: **89122734.0**

(51) Int. Cl.5: **G02F 3/02**

(22) Anmeldetag: **09.12.89**

(30) Priorität: **13.12.88 SU 4619989**

(43) Veröffentlichungstag der Anmeldung:
**20.06.90 Patentblatt 90/25**

(84) Benannte Vertragsstaaten:
**AT BE CH DE FR GB IT LI NL SE**

(71) Anmelder: **TSENTR
NAUCHNO-TEKHNICHESKOGO
TVORCHESTVA MOLODEZHI " LINAX"
Ulitsa Marshala Govorova, 34
Leningrad(SU)**

(72) Erfinder: **Lomashevich, Svyatoslav,
Alexandrovich
Ulitsa Zavodskaya, 24, kv. 7 Pargolovo
Leningrad(SU)**
Erfinder: **Bystrov, Jury Lvovich
prospekt 30-letia Pobedy, 30, kv.I60
Penza(SU)**
Erfinder: **Semenova, Galina Alexandrovna
ulitsa Turku, 9 korpus 5, kv.201
Leningrad(SU)**

(74) Vertreter: **Sparing Röhl Henseler
Patentanwälte European Patent Attorneys
Rethelstrasse 123
D-4000 Düsseldorf 1(DE)**

(54) Optischer Transistor.

(57) Optischer Transistor, der auf einer gemeinsamen Unterlage zwei Halbleiter (1), die im nichtlinearen Ringresonator (2) untergebracht sind, und zwei streifenförmige Wellenleiter (3) enthält, von denen jeder einen Bereich (A) der optischen Verbindung mit dem nichtlinearen Ringresonator (2) hat. Die Bereiche der optischen Verbindung sind entgegengesetzt angeordnet. Die Halbleiterlaser (1) haben Elektroden (4) für die Stromversorgung. Jeder Bereich (A) der optischen Verbindung ist mit einer Steuerelektrode (5) und jeder Abschnitt des nichtlinearen Ringresonators (2), der sich zwischen dem Halbleiterlaser (1) und entsprechenden Bereichen der optischen Verbindung befindet, auch mit einer Steuerelektrode (6) ausgestattet. Die Spiegel (7) bilden die Resonatoren der Halbleiterlaser (1).

FIG.1

Die vorliegende Erfindung betrifft das Gebiet der Auswertung von Informationen, die durch optische Signale übertragen werden, so Vorrichtungen der optischen Logik, der Verstärkung und Vermittlung optischer Signale mit Halbleiterstrukturen. Der bevorzugte Anwendungsbereich sind Lichtleitfasersysteme zur Verbindung und Übertragung von Informationen sowie integrierte optische Schaltungen und Rechentechnik.

Bekannt ist ein. nichtlineares Interferometer (US-A-3,813 605), das es gestattet, eine zweistellige Hysteresis-Abhängigkeit der Ausgangsleistung der optischen Strahlung von der Eingangsleistung zu erzeugen. Diese Charakteristik kann in eine einstellige Abhängigkeit eines Differentialverstärkers durch die Verstimmung eines Fabry-Perot-Resonators umgewandelt werden. Das Hauptelement dieser Vorrichtung ist ein nichtlinearer Sättigungsdämpfer, dessen Kennwert sich mit der Intensität der auftreffenden Strahlung ändert und der sich bei Überschreiten einer gewissen Grenze der Lichtintensität aufhellt. Die Möglichkeit des Einsatzes optischer Vorrichtungen in logischen Speicherelementen wurde experimentell erprobt.

Die Anwendung von dielektrischem Material als Arbeitsmedium macht wegen des geringfügigen Koeffizienten der Nichtlinearität dieses Materials große Pumpleistungen ($10^8$ W/cm$^2$), das heißt den Einsatz leistungsfähiger Laser erforderlich. Darüber hinaus schließt die fixierte Frequenzstimmung des Resonators und die fehlende regelnde Spannung auf dem dielektrischen Kristall die Möglichkeit aus, die Wellenlänge der Eingangsstrahlung zu ändern. Das bestimmt das Anwendungsgebiet der Vorrichtung - Laborerforschung des Effekts der Bistabilität. Andererseits gibt es einstweilen keine technologische Lösung für die integral-optische Vereinigung eines Halbleiterlasers mit dielektrischen Elementen. Die genannten Gründe stellen ein Hindernis für die praktische Anwendung der betreffenden Vorrichtung dar.

Bekannt ist eine "bistabile integrierte optische Vorrichtung" (zum Beispiel FR-A-2464498), in der Richtungskoppler durch positive elektrische Rückkopplung verknüpft sind, so daß in der Vorrichtung ein bistabiles Betriebsverhalten entsteht. Ein Vorzug der Vorrichtung sind deren kleine Abmessungen und die Möglichkeit einer integrierten Ausführung mit hoher Entkopplung im direkten und alternativen Kanal. Zu den Mängeln gehören die fehlende Möglichkeit der Änderung der Frequenz der Ausgangsstrahlung, die Notwendigkeit des Einsatzes eines Lichtempfängers und eines Verstärkers mit der nichtlinearen Charakteristik im Rückkopplungskreis. Dies liegt an der Verwendung elektrischer Rückkopplung in der Vorrichtung.

Von den bekannten Vorrichtungen steht der vorliegenden Erfindung dem technischen Wesen nach die Anlage besonders nah, die von der Firma "Hughes Aircraft" (E.A.J. Marcaliti: "Bends in Optical Dielectric", the Bell System Technical Journal, Vol. 48, N7, 1969, 2103-2132) hergestellt wird. Diese Vorrichtung stellt ein optisches Ventil dar, das Strahlungen verschiedener Frequenz nach Kanälen selektiert: Von den drei Frequenzen, die sich über den mit dem nichtlinearen Resonanzring verbundenen Wellenleiter verbreiten, wird die Frequenz gewählt, für die die Stimmungsfrequenz des Rings die Resonanzfrequenz ist. Gerade die Strahlung dieser Frequenz wird kommutiert.

Ein Vorteil der Vorrichtung ist deren Kompaktheit und die Anwendung von Resonanzringen als Elemente der integrierten Logik. Dabei werden die Resonanzringe mit äußerster Präzision (0 bis $10^8$) hergestellt. Bei einer Differenz zwischen dem Brechungsindex des Wellenleiters und des umgebenden Mediums von 0,01% beträgt der Radius des Rings R 0,04 bis 1 mm.

Zu den Mängeln dieses Geräts gehören das Fehlen der äußeren Quelle des Aufpumpens der optischen Strahlung für die Initialisierung der nichtlinearen Effekte beim Fixieren von Signalen niedriger Ebene, das Fehlen der absoluten Zugänglichkeit und der Gegenseitigkeit zwischen den optischen Kontakten, das fehlende Variieren der Wellenlänge der Ausgangsstrahlung sowie die Änderung der Stimmung des Resonanzrings, ein beträchtliches Niveau der Leistung der Eingangssignale zur Anregung von nichtlinearen Effekten im Resonanzring durch die Energie derselben Eingangsimpulse, was auf das Fehlen der Eingangsimpulse und der aktiven Elemente innerhalb des Systems selbst zurückzuführen ist, die fehlende Möglichkeit, die Verluste der Leistung der Signale zu kompensieren.

Der Erfindung liegt die Aufgabe zugrunde, einen optischen Transistor mit erweiterten funktionalen Möglichkeiten durch Erzielung von Bistabilität und differentialer Verstärkung erhöhter Steilheit zu schaffen.

Diese Aufgabe wird dadurch gelöst, daß in den optischen Transistor, der auf einer Unterlage einen nichtlinearen Ringresonator und mindestens ein Paar streifenförmige Wellenleiter enthält, von denen jeder einen optischen Verbindungsbereich mit dem nichtlinearen Ringresonator hat, wobei Bereiche der optischen Verbindung, die dem Paar der streifenförmigen Wellenleiter entsprechen, entgegengesetzt angeordnet sind, erfindungsgemäß zusätzlich mindestens zwei Halbleiterlaser vorgesehen sind, um die funktionalen Möglichkeiten durch die Erlangung der Charakteristika der Bistabilität und der Differentialverstärkung erhöhter Steilheit zu erweitern. Diese Laser werden im nichtlinearen Ringresonator außerhalb der optischen Verbindungsbereiche untergebracht, wobei jeder Verbindungsbereich und jeder Abschnitt des nichtlinearen Ringresonators, der sich zwischen den Halbleiterlasern und den optischen Verbindungsbereichen befindet, mit Steuerelektroden ausgestattet ist.

Es ist zweckmäßig, wenn der optische Transistor vier Halbleiterlaser und zwei Paar streifenförmige Wellenleiter enthält, wobei die Längsachsen jedes streifenförmigen Wellenleiters, die durch zentrale Abschnitte jedes streifenförmigen Wellenleiters führen und im Bereich der optischen Verbindung der streifenförmigen Wellenleiter mit dem nichtlinearen Resonator mit jedem benachbarten Endabschnitt des streifenförmigen Wellenleiters einen Winkel von 45° bilden und die benachbarten Endabschnitte der streifenförmigen Wellenleiter über vier Paar Bereiche der gegenseitigen optischen Verbindung verfügen, die mit Steuerelektroden ausgestattet sind und auf zwei gegenseitig senkrechten diametralen Geraden paarweise untergebracht werden.

Zweckmäßig ist ferner, wenn der optische Transistor als ein Bestandteil eine Matrix mit der Gesasmtzahl der Eingänge von 2n bildet, wo n die Zahl der Zellen der Umschaltmatrizen ist, die durch einen Ringresonator gebildet werden, der vier Laser und vier streifenförmige Wellenleiter enthält.

Die vorliegende Erfindung gestattet es,
- die optische Strahlung der Eingangssignale und die Pumpstrahlung der Laser im einheitlichen Element - dem Resonanzring - räumlich zu konzentrieren, von dem die Ausgangsstrahlung auf optische Kontakte übertragen wird,
- in zwei Arbeitsbereichen zu arbeiten: im bistabilen und im Bereich der Verstärkung der optischen Signale geringerer, (Mikrowatt-) Größen mit einem hohen (bis $10^4$) Koeffizient der Verstärkung,
- eine hohe Schwellenempfindlichkeit zu erzeugen, die durch das Vorhandensein der Quellen des Pumpens - Laser - gewährleistet wird, die das System am Punkt der Resonanzauslösung hält,
- die Ausgangscharakteristik des Transistors durch die Änderung der optischen Charakteristica des nichtlinearen Resonators und Laser zu steuern, was zur Erweiterung der funktionalen Möglichkeiten der Vorrichtung führt und auch die Möglichkeit bietet, sie als Verstärker, als Impulsformer, als Speicherelement, als Diskriminator und als Begrenzer zu verwenden,
- das optische Eingangssignal zum optischen Ausgangssignal zu reemittieren, das andere Frequenzen als das Eingangssignal aufweist, wobei durch die Wahl der Steuerspannung das digitale Übereinstimmen der eigenen Frequenzen der Strahlung der Halbleiterlaser mit den Frequenzen des Eingangssignals erzielt werden kann,
- die Erweiterung der übertragenen optischen Impulse durch die Frequenzfilterung der optischen Signale des optischen Transistors zu vermeiden.

Die Ausführungsform mit vier symmetrischen optischen Kontakten gestattet es, sie als Verzweiger, Demultiplexor und Umschalter optischer Kanäle zu verwenden.

Eine andere Variante gewährleistet die Möglichkeit, sie als Umschaltmatrix mit Verstärkung einzusetzen.

Weitere Ausgestaltungen der Erfindung sind der nachfolgenden Beschreibung zu entnehmen.

Die Erfindung wird anhand der in den beigefügten Abbildungen dargestellten Ausführungsbeispiele näher erläutert.

Fig. 1 zeigt ein Ausführungsbeispiel eines optischen Transistors,

Fig. 2 zeigt ein zweites Ausführungsbeispiel eines optischen Transistors,

Fig. 3 zeigt eine integrierte optische Struktur für den optischen Transistor,

Fig. 4 zeigt die Resonanzkennlinien eines nichtlinearen Ringresonators für den optischen Transistor,

Fig. 5 zeigt die Kennlinien der Bistabilität des optischen Transistors,

Fig. 6 zeigt die Kennlinien der Differentialverstärkung des optischen Transistors,

Fig. 7 zeigt ein Funktionsschema einer Matrix aus optischen Transistoren.

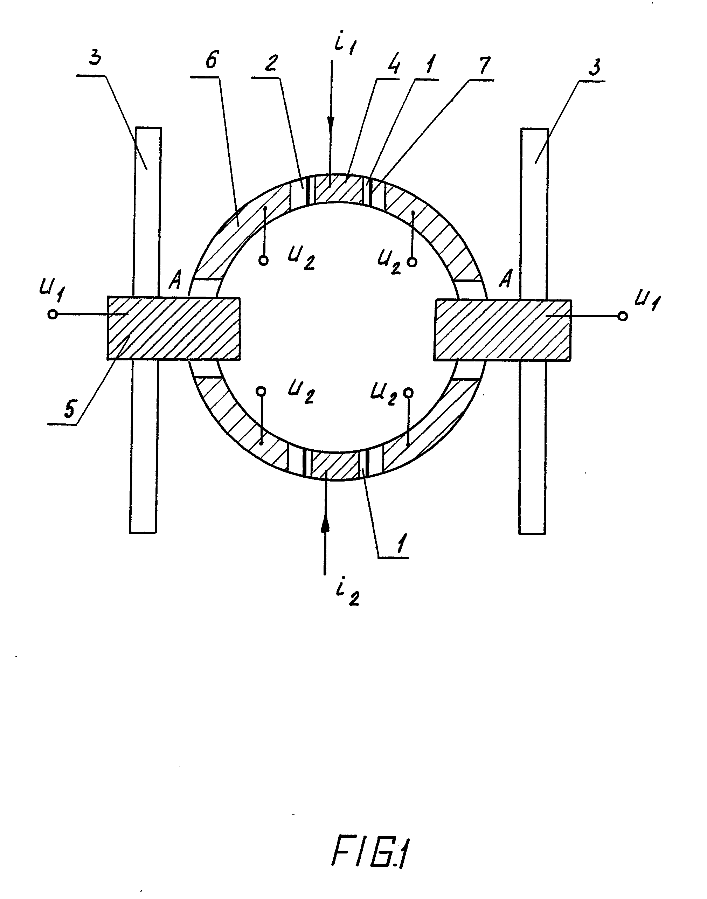

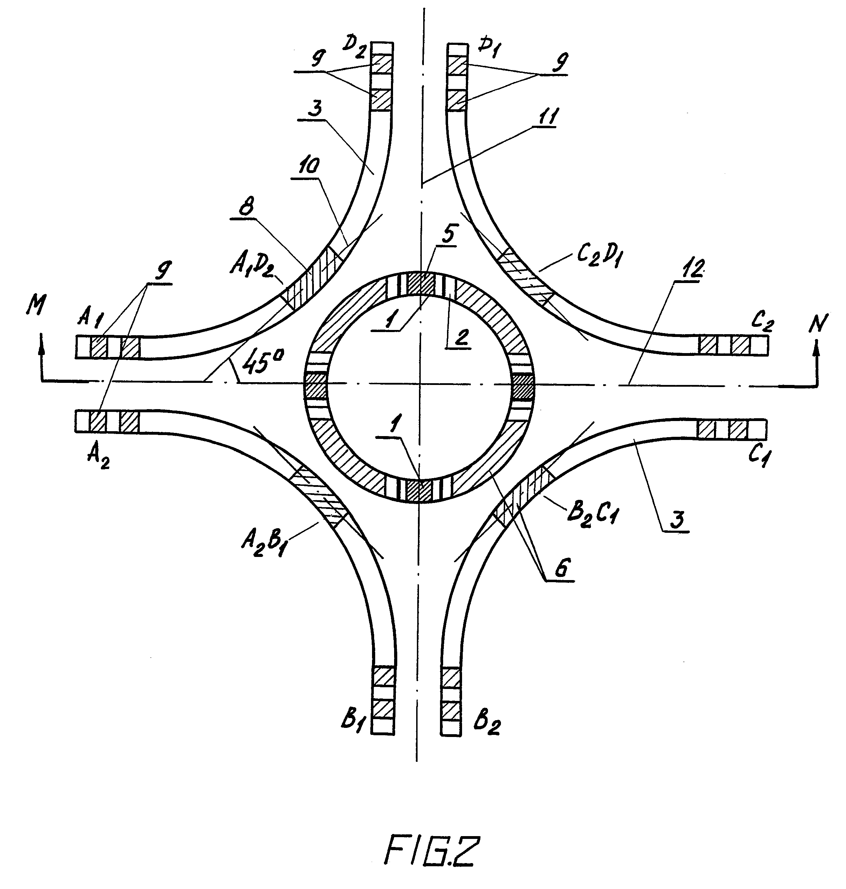

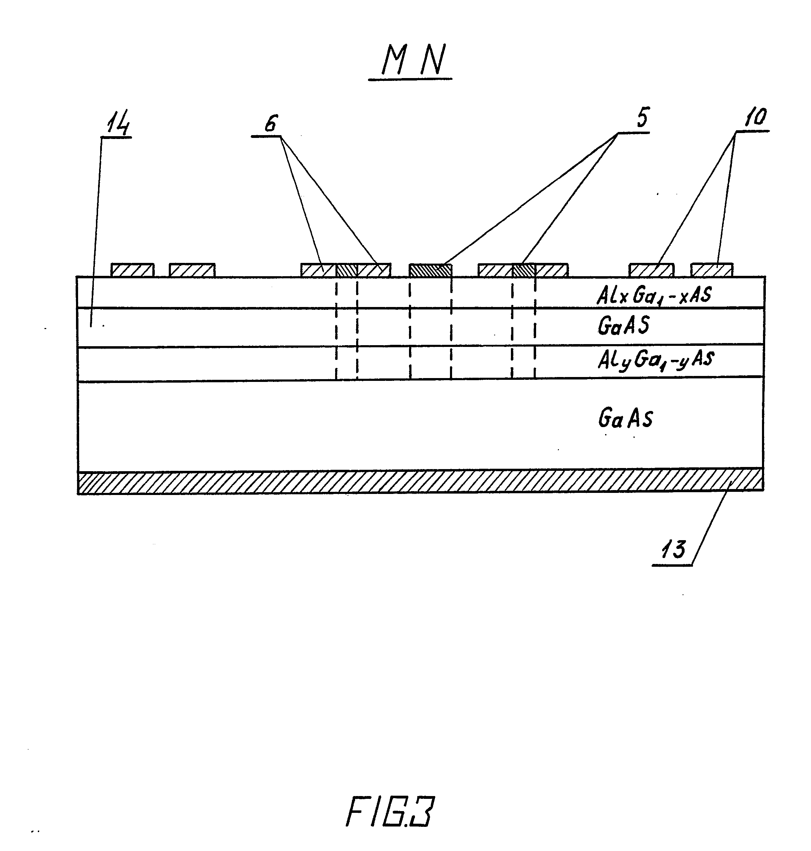

Das in Fig. 1 dargestellte Ausführungsbeispiel eines optischen Transistors enthält zwei Halbleiterlaser 1 auf einem gemeinsamen Substrat, die in einem nichtlinearen Ringresonator 2 untergebracht sind, und zwei streifenförmige Lichtleiter 3, von denen jeder einen optischen Verbindungsbereich A mit dem nichtlinearen Ringresonator 2 hat. Die optischen Verbindungsbereiche A sind gegenüberliegend angeordnet. Die Halbleiterlaser 1 sind mit Elektroden 4 für die Stromversorgung, jeder optische Verbindungsbereich A mit einer Steuerelektrode 5 und jeder Abschnitt des nichtlinearen Ringresonators 2, der sich zwischen dem Halbleiterlaser 1 und entsprechenden optischen Verbindungsbereichen A befindet, mit Steuerelektroden 6 ausgestattet. Spiegel 7 bilden die Resonatoren der Halbleiterlaser 1.

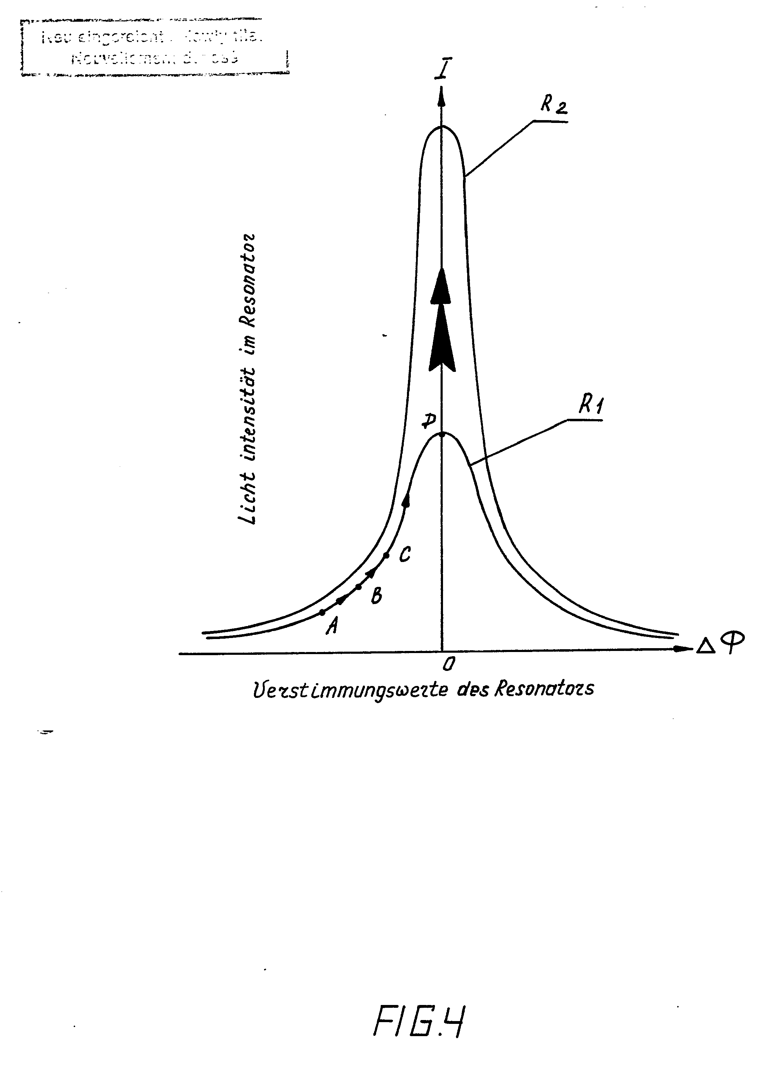

Der optische Transistor funktioniert folgendermaßen: Für den Arbeitsbereich, der der Charakteristik der Bistabilität entspricht, sind die Stromwerte $i_1$ und $i_2$ in den Halbleiterlasern 1 und die Spannungen $U_1$ und $U_2$ an den Steuerelektroden 5, 6 im ursprünglichen Zustand des optischen Transistors beim fehlenden optischen (äußeren) Eingangssignal so, daß die gesamte Intensität der Ausgangsstrahlung der Halbleiterlaser 1 die Schwelle für das Auftreten des nichtlinearen Effekts im Material des nichtlinearen Ringresonators 2 nicht erreicht, wobei sich der letztere in einem Zustand befindet, der von der Resonanz weit entfernt ist. Dieser Zustand des optischen Transistors hinsichtlich der Lichttransmission vom Eingang zum Ausgang entspricht dem Punkt A auf der Kurve $R_1$ (Fig. 4, wo I die Lichtintensität im nichtlinearen Ringresonator 2 und $\Delta\Phi$ die Größe der Verstimmung des nichtlinearen Ringresonators 2 ist). Beim Durchschreiten des Schwellenwertes der Lichtintensität im nichtlinearen Ringresonator 2 (durch die Vergrößerung der Stromwerte $i_1$ und $i_2$ bzw. der Änderung der Spannungen $U_1$ und $U_2$) vollzieht sich der Übergang in einen Arbeitsbereich, der durch die Punkte B, C und D auf der Kurve $R_1$ umschrieben wird. Kurzum, der Ringresonator 2 wird durch seine Aufhellung in Resonanz gestimmt. Bis zum Übergang der Halbleiterlaser 1 zum Arbeitsbereich der stimulierten Strahlung stellt somit die Kurve $R_1$ den geometrischen Ort der Punkte dar, die den Arbeitsbereich des optischen Transistors umschreiben. Mit der weiteren Verstärkung der Lichtintensität innerhalb des nichtlinearen Ringresonators 2 erhöht sich der Brechungsindex im aktiven Bereich der Halbleiterlaser 1 nach der Gesetzmäßigkeit $n = n_0 + n_2 I$, wobei $n_2$ der Koeffizient der Nichtlinearität des Materials des nichtlinearen Ringresonators 2 und $n_0$ der Brechungskoeffizient bei fehlender Strahlung ist. Es vollzieht sich ein schneller Übergang der Halbleiterlaser 1 zum Arbeitsbereich der stimulierten Strahlung, was seinerseits die Lichtintensität im nichtlinearen Ringresonator 2 noch mehr verstärkt. Das führt zum Umschlag des Arbeitspunktes des optischen Transistors auf die Resonanzkurve $R_2$ (Fig. 4).

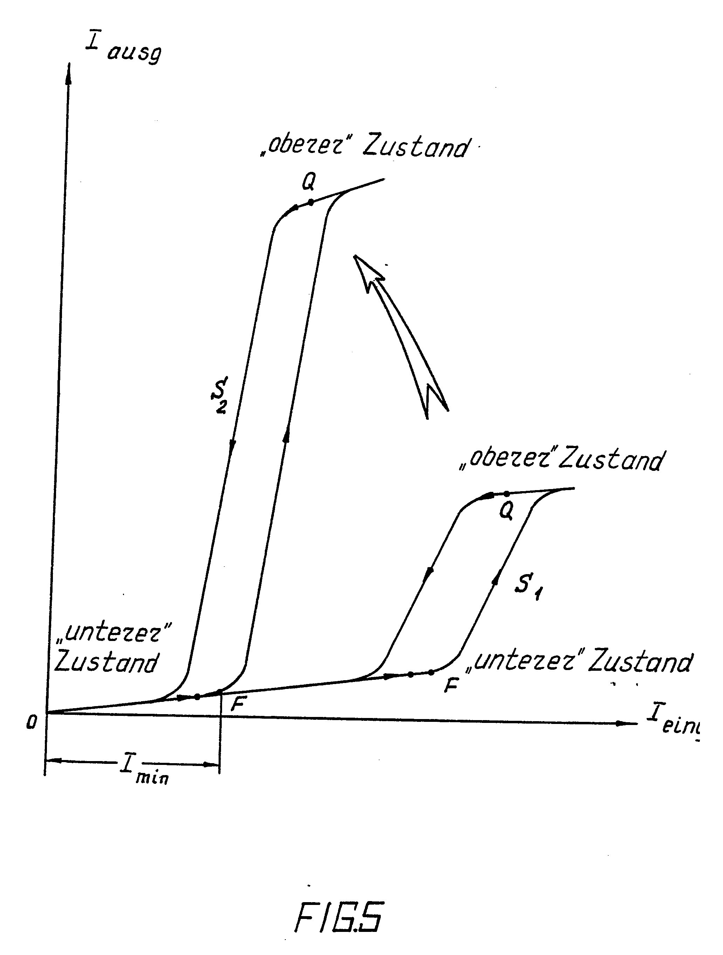

In Übereinstimmung mit zwei Resonanzkurven $R_1$ und $R_2$ werden zwei Hysteresekurven $S_1$ und $S_2$ unterschieden (Fig. 5).

Die Eingabe eines optischen Eingangssignals mit der Intensität $I_{eing.}$, deren Größe dieser zusätzlichen Steigerung der optischen Intensität im nichtlinearen Ringresonator 2 entspricht, die den betreffenden Prozeß der lawinenartigen Änderung der Eigenschaften des nichtlinearen Materials im Ringresonator 2 initiiert, führt letztendlich zum Übergang des optischen Transistors vom Zustand, der vom Punkt F umschrieben wird, in den Zustand, der vom Punkt Q umschrieben wird. Da jede Elementarzelle "streifenförmiger Wellenleiter 3 - nichtlinearer Ringresonator 2" ein bistabiles Element mit positiver Rückkopplung darstellt, die über den nichtlinearen Ringresonator 2 erfolgt, vollzieht sich das Umpumpen von Licht in den letzteren auch schlagartig (nach der Charakteristik der Bistabilität, die den Kennlinien $S_1$ und $S_2$ in Fig. 5 ähnlich sind). Das genannte bistabile Abreißen des umzupumpenden Signals erzeugt seinerseits einen drastischen Anstieg der Lichtintensität im nichtlinearen Ringresonator 2, was Erhöhung der Lichtintensität für die bistabile Zelle "streifenförmiger Wellenleiter 3 - nichtlinearer Ringresonator 2" bedeutet, die den Übergang des optischen Transistors in den Zustand, der vom Punkt Q umschrieben wird (Fig. 5), noch mehr beschleunigt. Der stabile Zustand der Vorrichtung, der dem genannten Punkt des Arbeitsbereichs entspricht, wird so lange aufrechterhalten, bis die Lichtintensität innerhalb des nichtlinearen Ringresonators 2 auf die Göße $I_{min}$ durch die Impulssenkung der Stromwerte $i_1$ und $i_2$ herabgesetzt ist, die für die Wiederherstellung des ursprünglichen Zustands der Vorrichtung (bei fehlenden äußeren optischen Signalen) erforderlich ist. Der nichtlineare Ringresonator 2 gewährleistet sowohl die Wechselwirkung zwischen den Halbleiterlasern 1 als auch die gemeinsame Arbeit der elementaren bistabilen Zellen "streifenförmiger Wellenleiter 3 - nichtlinearer Ringresonator 2".

Das symmetrische Positionieren der Laser gewährleistet die Gleichwertigkeit aller optischen Ein- und Ausgänge des optischen Transistors gegenüber den optischen Signalen sowie das gleichmäßige Aufpumpen der Halbringe des nichtlinearen Ringresonators 2.

Die Bedingungen der Stabilität des optischen Transistors entsprechen den Bedingungen der Stabilität, die für $C^3$-Laser und andere Vorrichtungen auf der Grundlage optisch verbundener nichtlinearer Resonatoren gelten, in denen bistabile optische Elemente verwendet werden.

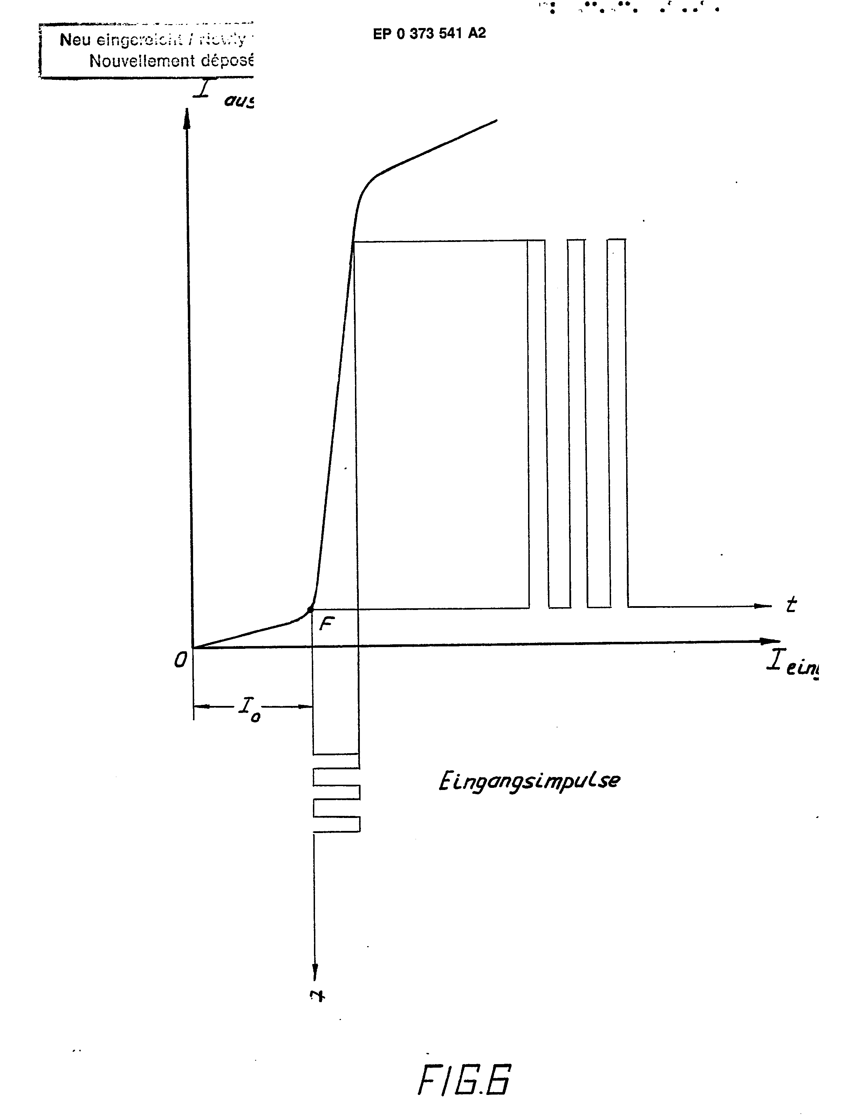

Im Arbeitsbereich, der der Charakteristik der Differentialverstärkung entspricht, hat der optische Transistor eine sich verändernde Steilheit der Verstärkungskennlinie $K_{verst.} = f(I_{eing.})$ (Fig. 6). Für die Arbeit des optischen Transistors als Verstärker optischer Signale mit den genannten Eigenschaften wird zuerst durch die Ströme $i_1$ und $i_2$ der Halbleiterlaser 1 der Wert I erzeugt, der dem Arbeitspunkt der Kennlinie $K_{verst.} = f(I_{eing.})$ entspricht. Die Spannungswerte $U_1$ und $U_2$ sowie die Stärke des optischen Eingangssignals sind so, daß der optische Transistor bei der drastischen Zunahme der Lichtintensität innerhalb des nichtlinearen Ringresonators 2 noch nicht in den bistabilen Arbeitsbereich übergeht, sondern als optischer Verstärker mit einem Verstärkungsfaktor von $10^3$ bis $10^4$ arbeitet.

Der optische Transistor von Fig. 2 enthält in der Wellenleiterschicht gelegene Heterostrukturen $Al_xGa_{1-x}As$ - GaAs - $Al_yGa_{1-y}As$ (Fig. 3), den Ringresonator 2 und die Wellenleiter 3. Vier Halbleiterlaser 1 mit Elektroden 5 an der oberen Oberfläche der Struktur kreuzen den Ringresonator 2. Jeder der Wellenleiter 3 ist mit dem Ringresonator optisch verbunden und über den Bereich der optischen Verbindung $A_1D_2$, $A_2B_1$, $C_2D_1$ und $B_2C_1$ sind Steuerelektroden 6 angebracht. Über den Bereichen aller gerichteten Koppler befinden sich Steuerelektroden 9, die mit $A_1$, $A_2$, $B_1$, $B_2$, $C_1$, $C_2$, $D_1$, $D_2$ und $A_1D_2$, $A_2B_1$, $B_2C_1$, $C_2D_1$ bezeichnet werden. An der Unterseite des Substrats ist eine abschließende Elektrode 13 ausgebildet (Fig. 3).

Die benachbarten Endabschnitte der streifenförmigen Wellenleiter 3 haben vier Paare von gegenseitigen optischen Verbindungsbereichen $A_1 A_2$, $B_1 B_2$, $C_1 c_2$, $D_1 D_2$.

Die Übertragung der optischen Strahlung im verbundenen Richtungskoppler, zum Beispiel $A_1 A_2$ (Fig. 2) von einem Eingang des Wellenleiters, zum Beispiel $A_1$ zum anderen - $A_2$ erfolgt beim Fehlen des Steuersignals. Das bedeutet, daß bei solchem Koeffizient der Verbindung ihre Länge kritisch, d.h. so ist, daß die Leistung von einem Eingang des Wellenleiters zum anderen vollständig übertragen wird (zum Beispiel von $A_1$ zu $A_2$). In der vorliegenden Vorrichtung betrifft das gleichermaßen jeglichen verbundenen Richtungskoppler wie auch die gebildeten Wellenleiter und Ringresonatoren (zum Beispiel Wellenleiter $A_1 D_2$ und Abschnitt des Rings $A_1 D_2$). Der Ringresonator 2 bildet vier Paare gebundener Richtungskoppler. Die Verbindung ist bei präziser Resonanz maximal.

Für die Verstärkung optischer Signale wird der Effekt der optischen Bistabilität verwendet, der es gestattet, durch die ursprüngliche Verstimmung des Resonators entweder eine Hysterese-Abhängigkeit oder eine eindeutige Charakteristik der Differentialverstärkung optischer Signale zu gewinnen.

Die zweite Ausführungsform funktioniert folgendermaßen: in dem Fall, da kein Steuersignal an den Steuerelektroden anliegt, befinden sich die Laser im wartenden Arbeitsbereich, an der Schwelle des Abreißens. Der Resonator ist verstimmt. Auf einen (beliebigen, zum Beispiel $A_1$) Eingang des Wellenleiters 3 wird ein optisches Signal gegeben, der verstärkt werden und weiter auf einen beliebigen (zum Beispiel $D_1$) Ausgang umgeschaltet werden soll. Durch die optische Verbindung zwischen den Eingängen $A_1$ und $A_2$ der Wellenleiter 3 wird die Strahlung auf den Eingang $A_2$ des Wellenleiters 3 und infolge der optischen Verbindung zwischen dem Wellenleiter $A_2$ und dem Ringresonator 2 in den letzteren umgepumpt und gegen den Uhrzeigersinn gerichtet. Diese zusätzliche Strahlung (neben der Strahlung der Laser 1) führt dazu, daß im Resonator 2 der Prozeß der Aufhellung des Mediums in Übereinstimmung mit der Abhängigkeit 1 und der Eigenschaft der optischen bistabilen Zelle "Wellenleiter - Ringresonator" beginnt. Diese Aufhellung kommt darin zum Ausdruck, daß sich der Resonator 2 der präzisen Resonanz nähert und das System in den Resonanzzustand übergeht. Die Richtungskoppler, die mit Rückkopplung erfaßt sind, bekunden Eigenschaften der optischen Bistabilität und gelangen bei einer gewissen Eingangsleistung sprunghaft zur maximalen Ausgangsleistung. Dieser Übergang wird hier durch Resonanzeigenschaften des Ringresonators 2 und durch das Vorhandensein aktiver Elemente - der Laser 1 - zusätzlich initiiert, deren Strahlung dem Effekt der optischen Bistabilität auch untergeordnet ist. Die Höchstwerte des beliebigen Ausgangskanals können die Eingangswerte um ein Dutzend-oder Hundertfaches übersteigen. Zugleich bleibt die Steilheit der Charakteristik "Licht-Licht" hoch genug, damit Größen von $10^3$-$10^4$ für den Verstärkungskoeffizienten verwirklicht werden können.

Kraft der optischen Verbindung des Resonanzrings mit den Wellenleitern wird die Strahlung in Richtung $C_1$, $D_1$, $B_1$ und durch die Verbindung zwischen den Wellenleitern in Richtung $C_2$, $D_2$, $B_2$ umgepumpt. Da die maximale Verbindung zwischen dem Ring 2 und den Wellenleitern 3 nur durch präzise Resonanz durch die Änderung des Brechungsindex im Resonator hergestellt wird, werden im Ausgang die Höchstwerte der Strahlung erzeugt. Auf diese Weise wird das auf den Eingang $A_1$ gegebene Signal nach der Verstärkung der Leistung vom beliebigen Ausgang initiiert. Für die Erzeugung des verstärkten Signals zum Beispiel am Ausgang $D_2$ sollen elektrische Steuersignale an die Elektroden $A_1 A_2$, $C_2 D_1$, $B_2 C_1$, $A_2 B_1$, $D_2 D_1$ angelegt werden.

Möglich sind folgende Varianten der Arbeit:
- von einem Eingang gleich auf alle Ausgänge (bzw. auf einen Teil der Ausgänge), d.h. die Schaltung I x,
- von allen Eingängen auf einen Ausgang, d.h. der Multiplexbereich n x I,
- von einem Eingang der Reihe nach auf alle Ausgänge: I x n,
- jeder wird der Reihe nach mit jedem verbunden - Bereich der absoluten Zugänglichkeit.

Die vorgeschlagene Vorrichtung kann die Funktion einer Speichereinrichtung erfüllen, d.h. eine Speicherzelle sein. Der Übergang vom "unteren" Zustand, der der logischen Null entspricht, in den "oberen", der der logischen Eins entspricht (Fig. 5), vollzieht sich sprunghaft, durch die drastische Erhöhung der Ausgangsintensität des Lichts unter Einwirkung des optischen Impulses, der über einem gewissen Schwellenwert der Intensität liegt.

Jeder Eingang des optischen Transistors kann für die Übertragung des optischen Speicherimpulses verwendet werden. Abgelesen werden kann vom beliebigen Ausgang.

Folgendes Beispiel erläutert das Arbeitsprinzip der Speichervorrichtung. Das System befindet sich im Ausgangszustand:

Die Laser 1 befinden sich im Arbeitsbereich der Generierung, auf jeglichen Ausgang kann minimale Leistung gegeben werden, die der logischen Null entspricht. Zum Beispiel wird auf den Eingang ein Impuls gegeben, der über den Wellenleiter 3 des Richtungskopplers und den Bereich der Verbindung $A_1 D_2$ in den Ringresonator übertragen wird. Die zusätzliche Strahlung (neben der Strahlung der Laser) im Resonator 2 wird Prozesse herbeiführen, die bereits oben beschrieben wurden: Die Strahlung im Resonator wird durch die Aufhellung des Mediums und durch Resonanzeigenschaften des Rings intensiver.

Das ist der "obere" Zustand des Systems. Bei der Eingabe des elektrischen Steuerimpulses auf die Elektroden $A_1A_2$ kann die logische Eins von den Ausgangswellenleitern $D_2$, $C_2$, $B_2$, $A_2$ und bei der Eingabe des elektrischen Steuersignals auf die Elektroden $D_1D_2$, $C_1C_2$, $B_1B_2$ von den Ausgängen $D_1$, $C_1$, $B_1$, $A_1$ abgelesen werden.

Sehr einfach kann der Zustand der Speicherzelle von nur einem, zum Beispiel vom $C_1$-Ausgang, abgelesen werden: Elektrische Steuersignale werden auf die Elektroden $A_1D_2$, $B_2C_1$, $A_2B_1$ gegeben.

Der Zustand der logischen Eins wird unabhängig davon aufrechterhalten, ob abgelesen wurde oder nicht. Das Löschen vollzieht sich durch impulsartiges Abtrennen der Laser von der Stromquelle. Die Länge dieses Impulses kann weniger als eine Pikosekunde sein.

In Fig. 3 ist die integrierte optische Struktur des optischen Transistors abgebildet.

Auf der Unterlage aus GaAs wird im Epitaxieverfahren eine Struktur auf der Grundlage fester Dreikomponenten-Lösungen im System GaAs-AlAs gezüchtet.

Mit traditionellen Methoden der Lithographie werden Fotoschablonen für die Herstellung von Elektroden sowie ein Schirm zur Ionenimplantation gefertigt.

Durch die Ionenimplantation werden die Koppler und der Ringresonator in der Wellenleiterschicht 14 hergestellt.

In der oberen Schicht der Struktur werden im Interferenz-Fotoätz-Verfahren Breggowsche Laserspiegel gefertigt. An der oberen Oberfläche der Struktur werden die Elektroden 5, 6, 10, 13 gefertigt. Die Elektroden 10 sind Mehrzellenelektroden, 5 und 6 sind elektrisch isolierte Elektroden. Die untere Elektrode 13 stellt ein metallisches Plättchen dar, auf dem die gesamte Vorrichtung mit Hilfe eines Lots auf der Grundlage von Indium befestigt wird.

Bei der Herstellung des Umschalters optischer Kanäle können Halbleiter der Gruppen $A_3B_5$ und $A_2B_6$ sowie Multikomponenten-Strukturen auf deren Grundlage verwendet werden.

Der Umschalter optischer Kanäle mit der Verstärkung optischer Signale nach Fig. 2 kann als elementare Zelle für den Aufbau von Schaltmatrizen und Feldern größerer Dimensionen gelten.

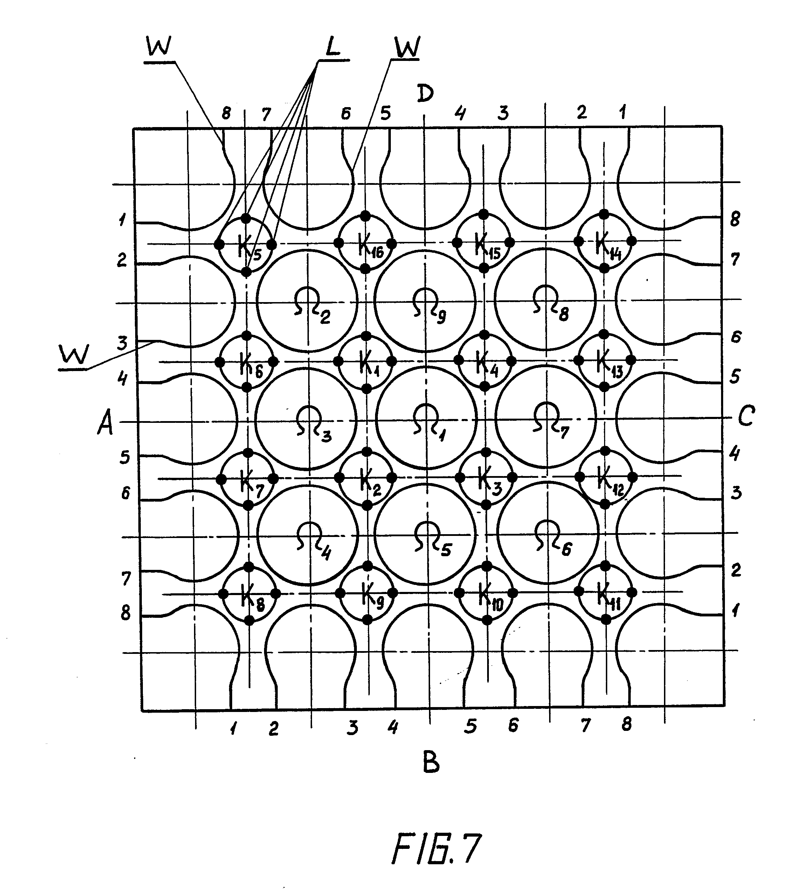

Auf Fig. 7 sind ein Schema optischer Verbindungen der Wellenleiter sowie die Ordnung der Ringleiter $\Omega$ und der Ringresonatoren K abgebildet, die mit vier Lasern 1 in der Matrix mit einer Gesamtzahl der Eingänge von 32 versehen sind. Der geschlossene Wellenleiter $\Omega$ verbindet optisch die vier Ringresonatoren K.

Das Umschalten der optischen Strahlung vom beliebigen Eingang auf den beliebigen Ausgang kann auf verschiedenen optischen Wegen erfolgen. So läßt sich das Umschalten von $A_1$ auf $C_1$ folgendermaßen vornehmen:

$A_1$ -- $K_1$ -- $\Omega$ -- $R_3$ -- $C_2$ -- $C_1$ oder
$A_1$ -- $K_1$ -- $\Omega$ -- $R_2$ -- $P_3$ -- $C_1$ oder
$A_1$ -- $K_1$ -- $\Omega$ -- $R_4$ -- $P_3$ -- $C_2$ -- $C_1$.

Die in Fig. 7 abgebildete Vorrichtung kann auch als eine Matrix einer Speichereinrichtung funktionieren. Das Spezifische einer solchen Speichermatrix besteht darin, daß der erregte "obere" Zustand der optischen Bistabilität des Speichers durch die Einführung eines optischen Signals in den beliebigen Eingang erzeugt und am beliebigen Ausgang abgelesen werden kann. Es kommt nur darauf an, die Algorithmen des Einschaltens elektrischer Steuerimpulse richtig zu wählen, damit der Zustand der gegebenen Zelle auf dem gegebenen Ausgang ausgeleuchtet wird.

Die Erfindung kann in Lichtleitfasersystemen zur Verbindung und Übertragung von Informationen, in Schemata der Integraloptik und Rechentechnik sowie als optischer Verstärker, als Impulsformer, als optisches Speicherelement, als Diskriminator, als optischer Begrenzer, als Umschaltelement optischer Kanäle, als optischer Generator, als Verzweiger und als Demultiplexor verwendet werden.

## Ansprüche

1. Optischer Transistor, der auf einer gemeinsamen Unterlage einen nichtlinearen Ringresonator (2) und mindestens ein Paar streifenförmiger Wellenleiter (3) enthält, von denen jeder einen optischen Verbindungsbereich (A) mit dem nichtlinearen Ringresonator (2) hat, wobei die optischen Verbindungsbereiche (A), die dem Paar der streifenförmigen Wellenleiter (3) entsprechen, gegenüberliegend angeordnet sind, **dadurch gekennzeichnet,** daß im nichtlinearen Ringresonator (2) außerhalb der optischen Verbindungsbereiche (A) mindestens zwei Halbleiterlaser (1) untergebracht sind, wobei jeder Verbindungsbereich (A) und jeder Abschnitt des nichtlinearen Ringresonators (2), der sich zwischen den Halbleiterlasern (1) und den Verbindungsbereichen (A) befindet, mit entsprechenden Steuerelektroden (6) ausgestattet ist.

2. Transistor nach Anspruch 1, dadurch gekennzeichnet, daß er vier Halbleiterlaser (1) und zwei Paar von streifenförmigen Wellenleitern (3) umfaßt, wobei die Längsachsen (10) jedes streifenförmigen Wellenleiters (3), die durch zentrale Abschnitte (8) jedes streifenförmigen Wellenleiters (3) führen und im Bereich der optischen Verbindung ($A_1D_2$, $C_2D_1$, $B_2C_1$, $A_2B_1$) der streifenförmigen Wellenleiter (3) mit dem nichtlinearen Resonator (2) mit jedem benachbarten Endabschnitt des streifenförmigen Wellenleiters (3) einen Winkel von 45° bilden und die benachbarten Endabschnitte ($A_1$, $A_2$, $B_1$, $B_2$, $C_1$, $C_2$, $D_1$, $D_2$) der streifenförmigen Wellenleiter (3) über vier Paare von Bereichen ($A_1A_2$, $B_1B_2$, $C_1C_2$, $D_1D_2$) der gegenseitigen optischen Verbindung verfügen, die mit Steuerelektroden (9) ausgestattet sind und auf zwei gegenseitig senkrechten diametralen Geraden paarweise untergebracht sind.

3. Transistor nach Anspruch 2, dadurch gekennzeichnet, daß er Bestandteil einer Matrix mit einer Gesamtzahl von 2n Eingängen ist, wobei n die Zahl der Zellen der Umschaltmatrix ist, die durch einen Ringresonator (K) gebildet werden, der vier Laser (L) und vier streifenförmige Wellenleiter (W) enthält, von denen mindestens einer ein geschlossener Wellenleiter ($\Omega$) ist.

FIG.1

FIG.2

<u>M N</u>

14      6           5    10

$Al_x Ga_{1-x} AS$

$GaAS$

$Al_y Ga_{1-y} AS$

$Ga\,AS$

13

*F I G.3*

FIG.4

FIG.5

$I_{aus}$

$t$

$I_{ein}$

$O$

$F$

$I_o$

Eingangsimpulse

$\downarrow$

FIG.6

FIG.7